# EUROPÄISCHE PATENTANMELDUNG

(11) **EP 4 545 164 A1**
(43) Veröffentlichungstag der Anmeldung: **30.04.2025**
(21) Anmeldenummer: 23205843.8
(22) Anmeldetag: 25.10.2023
(51) Int. Cl.: B01D 46/00, B01D 46/24, B01D 46/58, B01D 46/88

(54) **HEISSGASFILTERANLAGE ZUR FILTERUNG VON ABGASEN**

(71) Anmelder: Scheuch Management Holding GmbH, 4971 Aurolzmünster (AT)
(72) Erfinder: LECHNER, Georg, 4920 Schildorn (AT)
(74) Vertreter: SONN Patentanwälte GmbH & Co KG

(57) **Zusammenfassung**

Heißgasfilteranlage (1) zur Filterung von Abgasen, insbesondere der Zementklinkerherstellung, aufweisend:
eine Vielzahl von Filterkerzen (2), insbesondere Hochtemperatur-Filterkerzen,
einen eine Vielzahl von Filterbodenöffnungen (4) aufweisenden Filterboden (3), an welchem die Vielzahl von Filterkerzen (2) angeordnet sind,
eine Niederhalteeinrichtung (6) zum Niederhalten der Filterkerzen (2) gegen den Filterboden (3),
wobei die Niederhalteeinrichtung (6) eine Vielzahl von Einzelniederhaltern (7) jeweils zum Niederhalten genau einer der Filterkerzen (2) aufweist.

## Beschreibung

Die Erfindung betrifft eine Heißgasfilteranlage zur Filterung von Abgasen, insbesondere der Zementklinkerherstellung, aufweisend:
eine Vielzahl von Filterkerzen, insbesondere mit Hochtemperaturfasern,
einen eine Vielzahl von Filterbodenöffnungen aufweisenden Filterboden, an welchem die Vielzahl von Filterkerzen angeordnet sind,
eine Niederhalteeinrichtung zum Niederhalten der Filterkerzen gegen den Filterboden.

Weiters betrifft die Erfindung eine Anlage zur Herstellung von Zementklinker mit einer solchen Heißgasfilteranlage zur Entstaubung eines Rohgases der Zementklinkerherstellung.

Weiters betrifft die Erfindung ein Verfahren zum vorübergehenden Weiterbetrieb einer Heißgasfilteranlage bei Auftreten eines Defekts an einer der Filterkerzen sowie ein Verfahren zum Austausch einer defekten Filterkerze durch eine neue Filterkerze bei einer Heißgasfilteranlage.

Aus der EP 3 871 749 ist ein solches Heißgasfilter bekannt. Das Heißgasfilter weist eine Vielzahl von Filterkerzen auf, welche stehend an einem Filterboden montiert sind. Die Filterkerzen weisen verbreiterte Filterkragen auf, welche um Öffnungen des Filterbodens herum angeordnet sind. An der Unterseite der Filterkragen sind Ringdichtungen vorgesehen, mit welchen ein Rohgasaustritt in den Reingasraum vermieden werden soll. Um die Dichtigkeit zu gewährleisten, sind beim Stand der Technik großflächige Niederhalteplatten vorgesehen, mit welchen beispielsweise sechs Filterkerzen gegen den Filterboden gepresst werden. Für die Montage der Niederhalteplatten sind am Filterboden eine Vielzahl von Schweißbolzen angeordnet, welche mit Distanzhülsen versehen werden. Die Niederhalteplatten werden auf die Schweißbolzen gesteckt, mit den Distanzhülsen im gewünschten Abstand zum Filterboden gehalten und schließlich mit Muttern festgeschraubt. Die Erstmontage dieses Heißgasfilters ist grundsätzlich problemlos. Mit der großflächigen Niederhalteplatte können gleichzeitig eine Vielzahl von Filterkerzen dicht am Filterboden angeordnet werden.

In der Praxis hat sich jedoch der Tausch einer defekten Filterkerze des bekannten Heißgasfilters als sehr aufwändig und schwierig erwiesen. Für den Austausch muss die großflächige Niederhalteplatte entfernt und die defekte Filterkerze ersetzt werden. Die Ringdichtungen solcher Heißgasfilter sind vielfach als Filzdichtungen ausgeführt, welche eine definierte Pressung benötigen. Mit den Distanzhülsen wird daher die Höhe zwischen dem Filterboden und den Kerzenkragen vorgegeben. Dadurch soll sichergestellt werden, dass die Ringdichtungen nicht zu fest und nicht zu leicht niedergedrückt werden, um die Dichtigkeit am Filterboden zu gewährleisten. Mit dem Lösen der großflächigen Niederhalteplatte werden jedoch die Ringdichtungen aller Filterkerzen entspannt, die mit derselben Niederhalteplatte gepresst wurden. Somit ist die definierte Pressung der Ringdichtungen nach dem Lösen der Niederhalteplatte nicht mehr gegeben. Beim Stand der Technik bleibt daher nichts anderes übrig, als auch die Dichtungen der übrigen Filterkerzen an demselben Niederhalter zu tauschen. Das ist jedoch sehr aufwendig, weil die Filterkerzen zur Gänze aus dem Filterboden herausgehoben werden müssen, um die Ringdichtungen von unten auf die Filterkerzen aufschieben zu können. Danach müssen die Filterkerzen von oben in den Filterboden eingesetzt werden. Schließlich kann wieder die großflächige Niederhalteplatte vorgesehen werden. Die Handhabung der Filterkerzen während der Austauscharbeiten ist sehr delikat, da die vielfach aus Hochtemperaturmaterial gebildeten Filterkerzen spröde sind und zum Bruch neigen. Somit wäre es wünschenswert, die Handhabung der Filterkerzen auf ein Minimum zu beschränken. Beim Stand der Technik ist es ebenfalls nachteilig, dass es keinen einfachen Weg gibt, den Betrieb trotz einer gebrochenen Filterkerze vorübergehend fortzusetzen, wenn beispielsweise nicht sofort eine Ersatzkerze zur Verfügung steht.

Somit besteht die Aufgabe der vorliegenden Erfindung darin, zumindest einzelne Nachteile des Standes der Technik zu reduzieren bzw. zu eliminieren. Die Erfindung setzt sich bevorzugt zum Ziel, eine Heißgasfilteranlage zu schaffen, mit welcher der Austausch einer defekten Filterkerze oder der vorübergehende Weiterbetrieb des Heißgasfilters bei einem Defekt an einer der Filterkerzen vereinfacht werden kann.

Diese Aufgabe wird durch eine Heißgasfilteranlage nach Anspruch 1, eine Anlage zur Herstellung von Zementklinker nach Anspruch 13, ein Verfahren zum vorübergehenden Weiterbetrieb einer Heißgasfilteranlage nach Anspruch 14 und ein Verfahren zum Austausch einer defekten Filterkerze nach Anspruch 15 gelöst. Bevorzugte Ausführungsformen sind in den abhängigen Ansprüchen angegeben.

Erfindungsgemäß weist die Niederhalteeinrichtung eine Vielzahl von Einzelniederhaltern jeweils zum Niederhalten genau einer der Filterkerzen auf.

Die Einzelniederhalter sind einzeln montierbar und demontierbar. Das bedeutet, dass einer der Einzelniederhalter entfernt werden kann, ohne auch nur einen einzigen der anderen Einzelniederhalter lösen zu müssen. Durch das Entfernen eines einzelnen Einzelniederhalter wird nur jene Filterkerze freigegeben, welche mit dem Einzelniederhalter gegen den Filterboden gepresst wird. Der Presssitz der anderen Filterkerzen bleibt dabei aufrecht. Bei Auftreten eines Defekts an einer der Filterkerzen kann der zugehörige Einzelniederhalter entfernt, die schadhafte Filterkerze getauscht und neuerlich der Einzelniederhalter montiert werden. Während des Austauschs der Filterkerze verbleiben die anderen Einzelniederhalter im montierten Zustand am Filterboden, so dass der Anpressdruck auf die anderen Filterkerzen aufrechterhalten wird. Somit beeinträchtigt der Austausch einer Filterkerze die übrigen Filterkerzen nicht. Die erfindungsgemäße Ausführung ermöglicht es zudem, wie weiter unten näher beschrieben wird, eine der Filterbodenöffnungen durch Anordnung eines Blindverschlusselements auf einfache Weise vorübergehend zu verschließen, wenn keine passende Ersatzkerze vorhanden ist.

Die Filterkerzen weisen langgestreckte Filterkörper auf, welche einen inneren Hohlraum einschließen. Die Länge des Filterkörpers (d.h. die Längserstreckung der Filterkerze von der Unterseite des Filterbodens bis zum unteren Ende) kann mehr als 2,5 Meter, vorzugsweise mehr als 3 Meter, beispielsweise mehr als 3,5 Meter, insbesondere mehr als 5 Meter, aber auch mehr als 5,5 Meter, beispielsweise im Wesentlichen 6 Meter, betragen.

Bevorzugt weisen die Filterkörper Hochtemperaturfasern, beispielsweise Aluminiumsilikatfasern oder Kalzium-Magnesium-Silikatfasern, auf. Bei einem möglichen Verfahren zur Herstellung der Filterkerze wird ein Faserbrei über eine Vakuumform gesaugt und anschließend in einem Gasofen getrocknet. Dadurch wird die Festigkeit der Filterkerze erhöht, dennoch bleibt die Filterkerze bruchempfindlich und spröde. Die Filterkerzen mit den Hochtemperaturfasern werden vielfach auch als "Keramik-Filterkerzen" bezeichnet.

An den oberen Enden können die Filterkerzen jeweils einen Filterkragen aufweisen, welcher gegenüber dem Filterkörper verbreitert ist. Der Filterkragen liegt an der Oberseite des Filterbodens auf und erstreckt sich bevorzugt ringförmig um die Filterbodenöffnung. Vom Filterboden erstrecken sich die Filterkerzen vorzugsweise im Wesentlichen vertikal nach unten. Das Rohgas passiert den Filterkörper von außen nach innen, wobei das Rohgas von Schadstoffen befreit, insbesondere entstaubt, wird. Das so entstehende Reingas strömt vom inneren Hohlraum des Filterkörpers durch die Filterbodenöffnung in einen Reinraum, von dem das Reingas abgezogen werden kann.

Mit der Heißgasfilteranlage wird ein Rohgas gefiltert, welches bei einer bevorzugten Anwendung bei der Zementklinkerherstellung entsteht. Beispielsweise kann es sich um Abgase eines Klinkerkühlers oder um Abgase eines Vorwärmers oder um Bypassabgase eines Ofenbypasses einer Anlage zur Zementklinkerherstellung handeln.

Für die Zwecke dieser Offenbarung beziehen sich die Orts- und Richtungsangaben, wie "oben", "unten", "Oberseite", "Unterseite", "nach oben" und "nach unten", auf den bestimmungsgemäßen Gebrauchszustand der Heißgasfilteranlage. Wenn die Heißgasfilteranlage in einer abweichenden Anordnung verwendet werden soll, sind die Orts- und Richtungsangaben entsprechend zu übertragen.

Um den Einzelniederhalter für den Austausch einer defekten Filterkerze oder den vorübergehenden Blindverschluss einer defekten Filterkerze lösen zu können, sind am Filterboden bevorzugt eine Vielzahl von Halterungen angeordnet, an denen die Einzelniederhalter über reversibel lösbare Verbindungen, insbesondere Schraubverbindungen, montiert sind. "Reversibel lösbar" bedeutet, dass die Einzelniederhalter wiederholt und beschädigungsfrei an den Halterungen montiert und demontiert werden können. Die Einzelniederhalter sind bevorzugt über Schraubverbindungen mit Verbindungsschrauben mit den Halterungen verbunden.

Bei einer bevorzugten Ausführungsform weisen die Halterungen jeweils ein Montageelement, vorzugsweise mit einem Außengewinde, bevorzugt einen Montagebolzen, besonders bevorzugt einen Schweißbolzen, auf. An dem Montageelement ist zumindest ein Distanzelement, vorzugsweise zumindest eine Distanzscheibe, insbesondere reversibel lösbar, angeordnet. Bevorzugt sind an dem Montageelement zumindest zwei Distanzelemente, vorzugsweise zumindest zwei Distanzscheiben, übereinander, insbesondere flach aufeinander liegend, angeordnet. Die Einzelniederhalter sind über die reversibel lösbaren Verbindungen, insbesondere über die Schraubverbindungen, an den Halterungen montiert. Wenn ein einzelnes Montageelement vorgesehen ist, kann der Vorteil erzielt werden, dass die Anzahl an Verbindungen zwischen den Halterungen und dem Filterboden reduziert werden können. Besonders günstig ist es, wenn als Montageelement ein Schweißbolzen vorgesehen ist, welcher mit dem Filterboden verschweißt ist. Beim Stand der Technik der EP 3 871 749 dienten dieselben Schweißbolzen sowohl der Verbindung mit dem Filterboden als auch der Verbindung mit der großflächigen Niederhalterplatte, welche an Distanzhülsen auf den Schweißbolzen angeschlagen wurde. Das machte jedoch sehr lange Schweißbolzen erforderlich, welche, wie sich in der Praxis gezeigt hat, nicht mehr mit Schweißrobotern gesetzt werden konnten. Demgegenüber wird bei der bevorzugten Ausführungsform mit dem Montagelement nur die Verbindung der Halterung mit dem Filterboden hergestellt. Jede Halterung weist zusätzlich eine Mehrzahl von Schraubverbindungen auf, welche separat vom Montageelement gebildet sind. Mit den Schraubverbindungen können unterschiedliche Einzelniederhalter an derselben Halterung fixiert werden. Mit dem zumindest einen Distanzelement kann ein definierter Abstand des Einzelniederhalters vom Filterboden eingehalten werden. Dafür kann der Einzelniederhalter an der Oberseite des zumindest einen Distanzelements, bei mehreren Distanzelementen an der Oberseite des obersten der Distanzelemente, aufliegen. Die Unterseite des Distanzelements, bei mehreren Distanzelementen die Unterseite des untersten der Distanzelemente, kann am Filterboden aufliefen.

Um mehrere Einzelniederhalter an derselben Halterung festmachen zu können, weisen die Halterungen bei einer bevorzugten Ausführungsform jeweils mehrere, vorzugsweise jeweils genau vier, Verbindungsschrauben zur Ausbildung mehrerer, vorzugsweise von genau vier, Schraubverbindungen auf. Die Verbindungsschrauben bilden separate Befestigungsstellen, an denen jeweils einer der Einzelniederhalter montiert werden kann. Bevorzugt sind an jeder Halterung vier Verbindungsschrauben vorgesehen, an denen vier verschiedene Einzelniederhalter montiert sind. Umgekehrt betrachtet kann jeder Einzelniederhalter an mehreren, vorzugsweise an genau vier, Halterungen montiert sein. Die Einzelniederhalter können Montagelöcher aufweisen, durch die die Verbindungsschrauben durchtreten. Die Einzelniederhalter können durch Aufschrauben von Muttern auf die Verbindungsschrauben an den Halterungen fixiert sein. Die Verbindungsschrauben sind vorzugsweise reversibel lösbar an dem zumindest einen Distanzelement angeordnet. Beispielsweise können Lagerabschnitte der Verbindungsschrauben jeweils in einer Öffnung zwischen zwei Distanzelementen der jeweiligen Halterung angeordnet sein. Die Distanzelemente mit den Verbindungsschrauben können als Distanz- und Verbindungspakete vormontiert werden. Bei der Montage werden diese Distanz- und Verbindungspakete auf die einzelnen Montageelemente aufgesetzt und können mit Muttern fixiert werden.

Um die Montage der Heißgasfilteranlage zu vereinfachen und die Anzahl der Verbindungsstellen mit dem Filterboden zu reduzieren, sind die Verbindungsschrauben bei einer bevorzugten Ausführungsform jeweils verbindungsfrei, insbesondere frei von jeder Schweißverbindung, zum Filterboden angeordnet. Somit sind die Verbindungsschrauben nicht direkt am Filterboden montiert. Vorzugsweise sind die Verbindungsschrauben am zumindest einen Distanzelement vorgesehen. Dadurch wird einerseits die Montage erleichtert. Vorteilhaft ist weiters, dass der Wärmeeintrag in den Filterboden gegenüber der bekannten Ausführung reduziert wird, bei welcher alle Verbindungsbolzen am Filterboden verschweißt werden. Durch die geringe Anzahl von Verbindungsstellen bei der erfindungsgemäßen Ausführungsform wird einem Verzug des Filterbodens durch die thermische Einwirkung beim Verschweißen vorgebeugt. Ein solcher Verzug des Filterbodens könnte bei der Heißgasfilteranlage zu einer Schiefstellung der Filterkerzen führen, die eine Kollision der unteren Enden der Filterkerzen verursachen könnte. Vor allem bei einer Ausführung der Filterkerzen aus Hochtemperaturfasern, wie bevorzugt, könnte dies zu einem Bruch der Filterkerzen führen. Die Gefahr eines Verzugs des Filterbodens und damit einhergehender Defekte wird durch eine Aufteilung in das Montageelement, welches mit dem Filterboden verbunden ist, und die einzelnen Verbindungsschrauben, welche nicht mit dem Filterboden verbunden sind, stark reduziert bzw. vermieden.

Bei einer bevorzugten Ausführungsform sind die Verbindungsschrauben jeweils verkippbar gegenüber dem zumindest einen Distanzelement angeordnet. Somit können die Verbindungsschrauben bei der Montage der Einzelniederhalter, vorzugsweise in alle Richtungen bezüglich einer vertikalen Mittelstellung, gekippt werden. Vorteilhafterweise kann so eine Anpassung an Ungenauigkeiten bei der Ausführung der Filterkerzen ermöglicht werden. Das wäre beim Stand der Technik mit fix angeschweißten Montagebolzen nicht möglich.

Um eine vollflächige Anpressung der Filterkerzen zu ermöglichen, weisen die Einzelniederhalter bei einer bevorzugten Ausführungsform jeweils ein Niederhalteteil, insbesondere ein Rundteil, zur Auflage an der Stirnseite (d.h. an der Oberseite) der jeweiligen Filterkerze auf, wobei die Niederhalteteile jeweils eine zentrale Reingas-Durchgangsöffnung aufweisen. Die zentrale Reingas-Durchgangsöffnung ist vorzugsweise konzentrisch zur zentralen Reingas-Austrittsöffnung an der Oberseite der Filterkerze angeordnet. Sowohl die Reingas-Durchgangsöffnung des Einzelniederhalters als auch die Reingas-Austrittsöffnung der Filterkerze sind bevorzugt konzentrisch zur Filterbodenöffnung angeordnet.

Bei einer bevorzugten Ausführungsform weisen die Einzelniederhalter mehrere, vorzugsweise genau vier, vom Niederhalteteil wegstehende Befestigungsflansche auf, welche über die reversibel lösbaren Verbindungen, insbesondere über die Schraubverbindungen, mit den Halterungen verbunden sind. Vorzugsweise stehen die Befestigungsflansche in verschiedene Richtungen, insbesondere sternförmig, vom Außenumfang des Rundteils, vorzugsweise im Wesentlichen in radialer Richtung, nach außen ab. Die Befestigungsflansche weisen bevorzugt die Montagelöcher auf, an denen die Verbindungsschrauben der Halterungen angeordnet sind.

Bevorzugt weisen die Einzelniederhalter jeweils eine Niederhalteplatte auf, welche jeweils das Rundteil und die Befestigungsflansche aufweist.

Um die Montage und Demontage möglichst einfach zu gestalten, sind die Befestigungsflansche bei einer bevorzugten Ausführungsform jeweils mit genau einer der Halterungen verbunden.

Bei einer bevorzugten Ausführungsform sind zwischen benachbarten Einzelniederhaltern Freiräume zur Sichtkontrolle des Filterbodens und/oder von Dichtungen, insbesondere Ringdichtungen, zwischen den Filterkerzen und dem Filterboden ausgebildet. Beim Stand der Technik mit der großflächigen Niederhalteplatte für sechs Filterkerzen waren die Oberseite des Filterbodens bzw. die Ringdichtungen typischerweise von oben nicht einsehbar. Demgegenüber ermöglichen die Freiräume zwischen den Einzelniederhaltern eine Sichtkontrolle auf den Filterboden bzw. die Dichtungen. Vorteilhafterweise kann so festgestellt werden, ob es zu einem Staubdurchtritt gekommen ist, der auf einen Defekt schließen lässt.

Die großflächigen Niederhalteplatten beim Stand der Technik hatten den Effekt, dass der Filterboden begradigt wird, wenn der Filterboden durch Schweißarbeiten verzogen ist oder der Filterboden durch das Gewicht der Filterkerzen oder den Wärmeeintrag vom Heißgas durchhängt. Um die Abschwächung dieses Effekts bei Verwendung der Einzelniederhalter zu kompensieren, ist bei einer bevorzugten Ausführungsform unterhalb des Filterbodens eine Versteifungsstruktur mit Längs- und/oder Querversteifungselementen angeordnet, auf welcher der Filterboden aufliegt. In Gebrauch liegt der Filterboden mit den daran angeordneten Filterboden auf der Versteifungsstruktur auf, welche die ebene Form des Filterbodens vorgibt. Bei Verwendung von Schlauchfiltern müsste der Filterboden nicht perfekt eben sein, weil sich der Schlauch durch die Schwerkraft eher selbst in einer geraden Position ausrichtet und nicht zwingend ein Defekt zu befürchten wäre, sollten sich die unteren Enden der Schlauchfilter berühren. Demgegenüber sind Hochtemperatur-Filterkerzen sehr steif und spröde, so dass keine Selbstausrichtung erfolgen kann und bei einem Kontakt der unteren Enden ein Kerzenbruch auftreten kann. Dieses Problem ist umso größer, je länger die Filterkerzen sind. Da längere Filterkerzen auf hohe Gasvolumenströme bei geringer Grundfläche ausgelegt sind, ist ein Trend zu besonders langen Filterkerzen zu beobachten. Vor allem bei diesen Ausführungen ist es günstig, wenn der Filterboden auf der Versteifungsstruktur abgestützt ist.

Um den Verzug des Filterbodens zu verringern, ist die Versteifungsstruktur bevorzugt frei von einer stoffschlüssigen Verbindung, insbesondere frei von einer Schweißverbindung, mit dem Filterboden.

Im Fall eines Defekts ist bevorzugt eine weitere Filterbodenöffnung des Filterbodens mit einem Blindverschlusselement verschlossen, wobei das Blindverschlusselement mit einem weiteren Einzelniederhalter gegen den Filterboden gedrückt ist.

Wie beim Stand der Technik sind bevorzugt Dichtungen, insbesondere Ringdichtungen, vorzugsweise Filzdichtungen, zwischen den Filterkragen der Filterkerzen und dem Filterboden angeordnet. Die Filzdichtungen können Glasfasern, Aluminiumsilikatfasern oder Calcium-Silicat-Fasern aufweisen.

Die erfindungsgemäße Anlage zur Herstellung von Zementklinker weist zumindest auf:
eine Ofenanlage, insbesondere einen Drehrohrofen, zum Brennen von Zementklinker,
eine Heißgasfilteranlage zur Entstaubung eines Rohgases der Zementklinkerherstellung in einer der oben beschriebenen Ausführungsvarianten.

Die Anlage zur Herstellung von Zementklinker kann, wie im Stand der Technik üblich,
einen Vorwärmer, insbesondere eine Zyklonkaskade mit mehreren Zyklonen, zum Vorwärmen von Rohmaterial vor dem Eintritt des Rohmaterials in die Ofenanlage mit einem Teil der Abgase der Ofenanlage und/oder
einen Klinkerkühler zum Kühlen von Zementklinker mit Luft und/oder
einen Ofenbypass zum Abziehen eines weiteren Teils der Ofenabgase vom Ausgang der Ofenanlage aufweisen. Bei bevorzugten Anwendungen kann das mit der Heißgasfilteranlage gefilterte Rohgas
das aus dem Vorwärmer austretende Abgas oder
die Abluft des Klinkerkühlers oder
der mit dem Ofenbypass abgezogene Teil der Ofenabgase sein. Selbstverständlich können mehrere erfindungsgemäße Heißgasfilteranlagen vorgesehen sein, mit welchen mehrere der oben beschriebenen Gasströme der Anlage zur Herstellung von Zementklinker gefiltert werden können.

Das erfindungsgemäße Verfahren zum vorübergehenden Weiterbetrieb einer Heißgasfilteranlage in einer der oben beschriebenen Ausführungsvarianten bei Auftreten eines Defekts an einer der Filterkerzen weist zumindest die folgenden Schritte auf:
Lösen des Einzelniederhalters, mit welchem die defekte Filterkerze niedergehalten wird, insbesondere ohne die Einzelniederhalter für die übrigen Filterkerzen zu lösen;
Vorzugsweise Entfernen der defekten Filterkerze, so dass die zugehörige Filterbodenöffnung freiliegt;
Verschließen der Filterbodenöffnung mit einem Blindverschlusselement, und
Vorzugsweise Montieren des Einzelniederhalters, so dass das Blindverschlusselement mittels des Einzelniederhalters gegen den Filterboden gedrückt wird.

Das erfindungsgemäße Verfahren zum Austausch einer defekten Filterkerze durch eine neue Filterkerze einer Heißgasfilteranlage in einer der oben beschriebenen Ausführungsvarianten weist zumindest die folgenden Schritte auf:
Lösen des Einzelniederhalters, mit welchem die defekte Filterkerze niedergehalten wird, insbesondere ohne die Einzelniederhalter für die übrigen Filterkerzen zu lösen;
Entfernen der defekten Filterkerze,
Anordnen der neuen Filterkerze,
Montieren des Einzelniederhalters, so dass die neue Filterkerze gegen den Filterboden gedrückt wird.

Die Erfindung wird nachstehend anhand eines in den Zeichnungen dargestellten Ausführungsbeispiels weiter erläutert.
Fig. 1 zeigt eine erfindungsgemäße Heißgasfilteranlage mit langgestreckten Filterkerzen.
Fig. 2 zeigt eine Detailansicht eines Filterbodens der erfindungsgemäßen Heißgasfilteranlage, bei welcher die Filterkerzen mit Einzelniederhaltern gegen einen Filterboden gedrückt werden.
Fig. 3 und Fig. 4 zeigen die Montage von Halterungen für die Einzelniederhalter am Filterboden.
Fig. 5 zeigt einen Blindverschluss einer der Filterbodenöffnungen des Filterbodens.
Fig. 6 zeigt eine Versteifungsstruktur für den Filterboden der Heißgasfilteranlage.

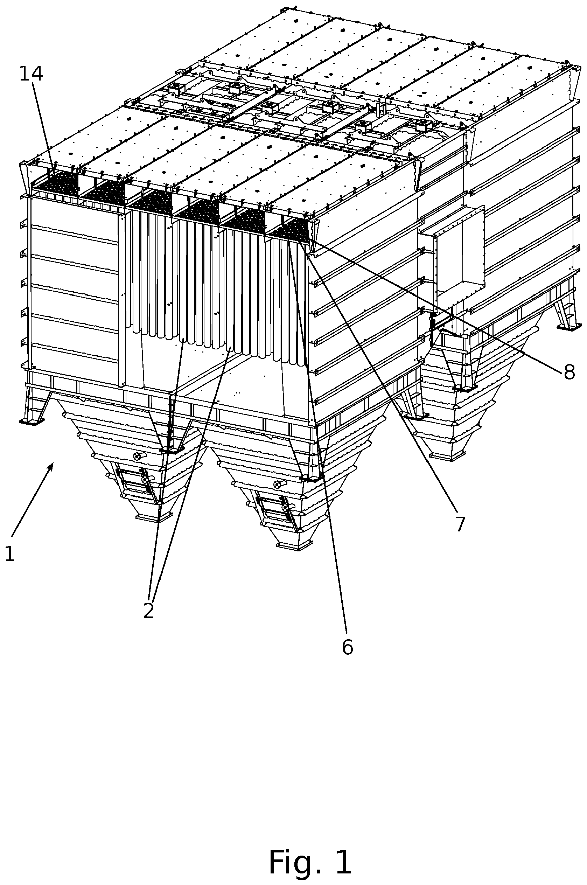

Fig. 1 zeigt eine Heißgasfilteranlage 1, mit welcher Abgase gefiltert, insbesondere von Staub befreit, werden können. Die Heißgasfilterfilteranlage 1 weist eine Vielzahl von Filterkerzen 2, vorzugsweise mehr als 20 Filterkerzen, beispielsweise mehr als 60 Filterkerzen 2, auf, welche parallel und in Abstand zueinander in im Wesentlichen vertikaler Stellung angeordnet sind. Die Filterkerzen weisen jeweils einen langgestreckten Filterkörper aus einem Heißgasfiltermaterial, insbesondere aus Hochtemperaturfasern, auf. Als "Heißgasfiltermaterial" wird hier ein Filtermaterial verstanden, welches eine maximale Betriebstemperatur von zumindest 300 °C, vorzugsweise von zumindest 350 °C, insbesondere von zumindest 450 °C oder von zumindest 500 °C, aufweist. Die maximale Betriebstemperatur ist jene Temperatur der zu filternden Rohgase, welche die Rohgase im Betrieb nicht überschreiten dürfen, um eine Beschädigung der Filterkerzen 2 zu vermeiden. Davon zu unterscheiden sind beispielsweise Schlauchfilter mit textilen Medien, die lediglich auf maximale Betriebstemperaturen von bis zu 260°C ausgelegt sind.

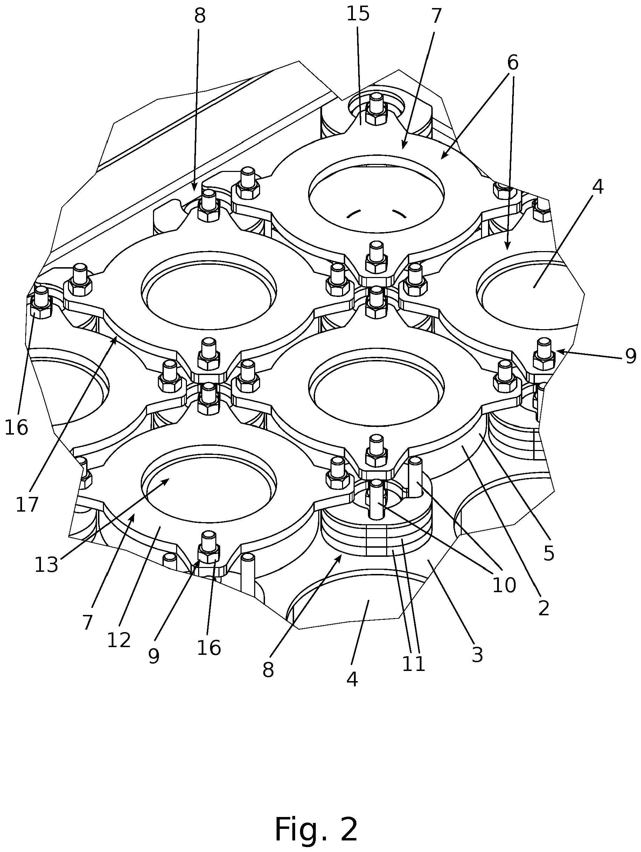

Wie aus Fig. 2 ersichtlich, weist die Heißgasfilteranlage 1 einen plattenförmigen Filterboden 3 auf, in welchem eine Vielzahl Filterbodenöffnungen 4 ausgebildet sind. An jeder Filterbodenöffnung 4 ist genau eine der Filterkerzen 2 angeordnet. Dafür weisen die Filterkerzen 2 jeweils einen Filterkragen 5 auf, welcher sich ringförmig um die jeweilige Filterbodenöffnung 4 erstreckt. An der Unterseite des Filterkragens 5 ist eine Dichtung (nicht gezeigt), insbesondere eine Ringdichtung angeordnet. Um den Presssitz der Dichtungen zu gewährleisten, ist eine Niederhalteeinrichtung 6 vorgesehen, mit welcher ein Anpressdruck auf die ringförmigen Oberseiten der Filterkerzen 2 ausgeübt wird.

Wie aus Fig. 2 ersichtlich, weist die Niederhalteeinrichtung 6 eine Vielzahl von Einzelniederhaltern 7 auf, wobei im gezeigten Beispiel ebenso viele Einzelniederhalter 7 wie Filterkerzen 2 vorgesehen sind. Die Einzelniederhalter 7 sind als Niederhalterplatten ausgeführt und jeweils dazu eingerichtet, genau eine der Filterkerzen 2 gegen die Dichtungen zwischen den Filterkragen 5 und dem Filterboden 3 zu drücken, aber keinen Anpressdruck auf die übrigen Filterkerzen 2 auszuüben. Dadurch kann jede Filterkerze 2 einzeln demontiert bzw. montiert werden.

Wie aus Fig. 2 weiters ersichtlich, sind am Filterboden 3 eine Vielzahl von Halterungen 8 angeordnet, an denen die Einzelniederhalter 7 über reversibel lösbare Verbindungen, insbesondere Schraubverbindungen 9, montiert sind. An jeder Halterung 8 sind vier Verbindungsschrauben 10 vorgesehen, welche von einem Paket aus Distanzscheiben 11 nach oben vorstehen. Die Einzelniederhalter 7 weisen jeweils ein Niederhalteteil 12, im gezeigten Beispiel ein Rundteil, auf, welches vollflächig an der Stirnseite der jeweiligen Filterkerze 2, d.h. an der Oberseite des Filterkragens 5, anliegt. Die Niederhalteteile 12 schließen jeweils eine zentrale Reingas-Durchgangsöffnung 13 ein, durch die das Reingas vom inneren Hohlraum der Filterkerze 2 in einen Reinraum 14 der Heißgasfilteranlage 1 gelangt. Die Reingas-Durchgangsöffnung 13 des Einzelniederhalters 7 ist fluchtend mit der Reingas-Austrittsöffnung der Filterkerze 2 angeordnet. Jeder Einzelniederhalter 7 weist mehrere, im gezeigten Beispiel genau vier, Befestigungsflansche 15 auf, welche vom Niederhalteteil 12 (bezogen auf das Zentrum der Reingas-Durchgangsöffnung 13) nach außen wegstehen. Die Befestigungsflansche 15 liegen oberseitig auf den obersten Distanzscheiben 11 der Halterungen 8 auf. An den Befestigungsflanschen 15 sind Montagelöcher ausgebildet, mit denen die Einzelniederhalter 7 auf die Verbindungsschrauben 10 aufgesteckt werden. Die Einzelniederhalter 7 sind durch Muttern 16 fixiert, welche auf die freien Enden der Verbindungsschrauben 10 aufgeschraubt werden.

Wie aus Fig. 2 weiters ersichtlich, ist zwischen benachbarten Einzelniederhaltern 7 jeweils ein Freiraum 17 ausgebildet, welcher den Blick auf den benachbarten Filterkragen 5 bzw. die darunter angeordnete Dichtung freigibt. Somit können die Freiräume 17 zur Sichtkontrolle genutzt werden, ob Staubansammlungen auf eine Leckage von Rohgas hindeuten.

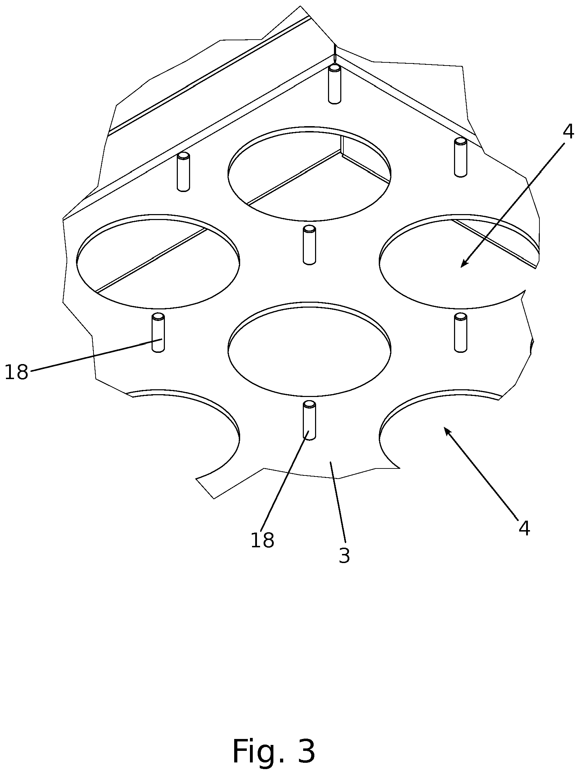

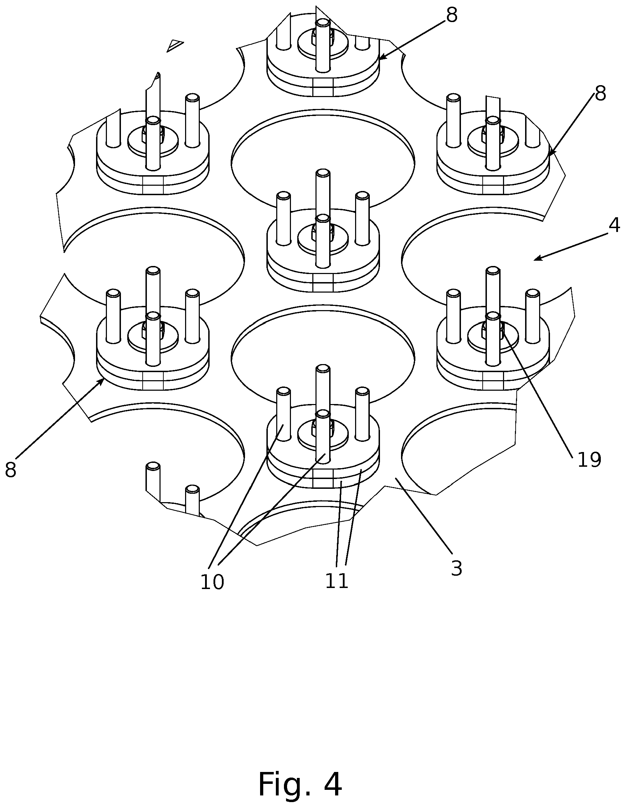

Fig. 3 und Fig. 4 zeigen die Montage der Halterungen 8 am Filterboden 3.

Wie aus Fig. 3 ersichtlich, werden bei der Montage der Halterungen 8 zunächst einzelne Montageelemente 18, im gezeigten Beispiel Montagebolzen, vorzugsweise mit einem Schweißroboter, auf dem Filterboden 3 aufgeschweißt.

Wie aus Fig. 4 ersichtlich, werden anschließend die Pakete aus den Distanzscheiben 11 gemeinsam mit den Verbindungsschrauben 10 auf die Montageelemente 18 gesteckt. Mittels Mutterelementen 19 werden die Halterungen 8 am Filterboden 3 fixiert.

Durch Anordnung der Filterkerzen 2 und der Einzelniederhalter 7 wird der finale Montagezustand gemäß Fig. 2 erreicht, wobei in Fig. 2 lediglich der besseren Übersicht halber einzelne Filterbodenöffnungen 4 frei gelassen sind. Da die Verbindungsschrauben 10 mit einem Spiel in Montageöffnungen des Pakets aus Distanzscheiben 11 angeordnet und nicht mit dem Filterboden 3 direkt verbunden sind, können die Verbindungsschrauben 10 bei der Montage der Einzelniederhalter 7 aus ihrer gezeigten vertikalen Stellung (senkrecht zum Filterboden 3) in eine Schiefstellung verkippt werden, wodurch Toleranzen in der Ausführung der Filterkerzen 2 ausgeglichen werden können.

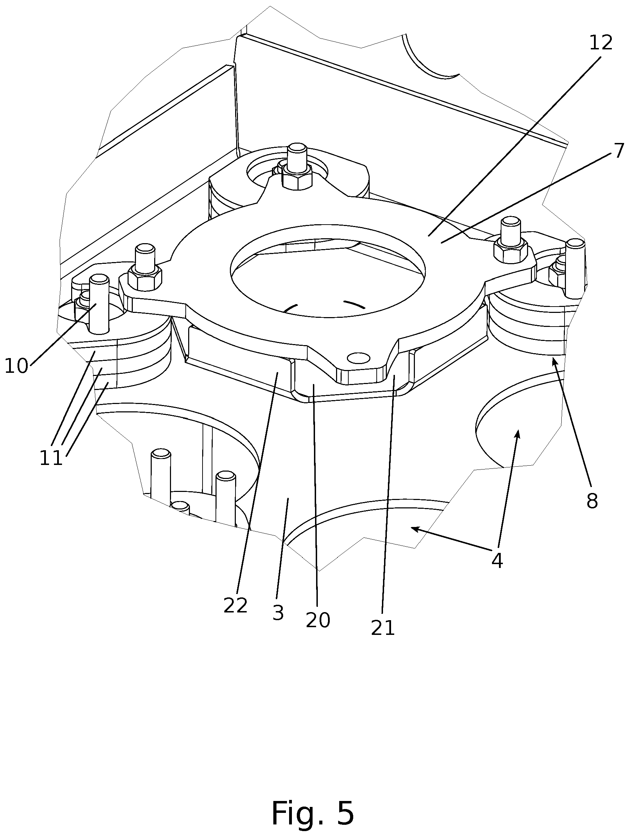

Fig. 5 zeigt ein Detail der Heißgasfilteranlage 1, bei welcher ein Blindverschlusselement 20 über einer der Filterbodenöffnungen 4 angeordnet ist, um einen Rohgasaustritt aus dieser Filterbodenöffnung 4 zu verhindern. Das Blindverschlusselement 20 weist im gezeigten Beispiel ein Flachteil 21, welches die Filterbodenöffnung 4 abdeckt, und davon hochstehende Stege 22, auf. Der Einzelniederhalter 7 liegt an den Oberkanten der Stege 22 an, um das Blindverschlusselement 20 gegen den Filterboden 3 zu drücken. Das Blindverschlusselement 20 kann bei einem Defekt der Filterkerze 2 vorgesehen werden, wenn keine passende Ersatzkerze zur Verfügung steht. In diesem Fall kann die defekte Filterkerze 2 entfernt und die Filterbodenöffnung 4 mit dem Blindverschlusselement 20 verschlossen werden. Auf diese Weise wird ein vorübergehender Weiterbetrieb der Heißgasfilteranlage 1 ermöglicht, bis ein Austausch der defekten Filterkerze 2 durch eine Ersatzkerze vorgenommen werden kann. Demgegenüber wäre es beim Stand der Technik nicht praktikabel, für eine solche Überbrückungslösung die Mehrfach-Niederhalteplatte zu lösen, da diese einen Tausch aller Dichtungen in Bereich des Mehrfach-Niederhalterplatte erforderlich machen würde.

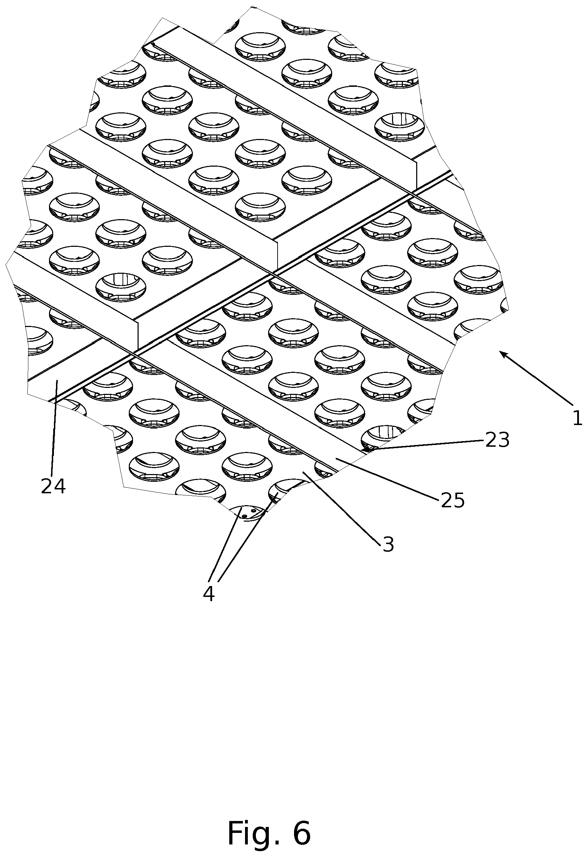

Fig. 6 zeigt ein weiteres Detail der Heißgasfilteranlage 1. In der gezeigten Ausführung ist unterhalb des Filterbodens 3 eine Versteifungsstruktur 23 mit Längsversteifungselementen 24 und Querversteifungselementen 25 vorgesehen. Die Längs- 24 und die Querversteifungselemente 25 sind im gezeigten Beispiel als Versteifungsleisten ausgebildet, welche stehend, d.h. senkrecht zur Haupterstreckungsebene des Filterbodens 3, angeordnet sind. Im gezeigten Beispiel kreuzen sich die Längs- 24 und die Querversteifungselemente 25 im rechten Winkel. Die Versteifungsstruktur 23 ist nicht mit dem Filterboden 3 verschweißt.

## Patentansprüche

1. Heißgasfilteranlage (1) zur Filterung von Abgasen, insbesondere der Zementklinkerherstellung, aufweisend:
eine Vielzahl von Filterkerzen (2), insbesondere mit Hochtemperaturfasern,
einen eine Vielzahl von Filterbodenöffnungen (4) aufweisenden Filterboden (3), an welchem die Vielzahl von Filterkerzen (2) angeordnet sind,
eine Niederhalteeinrichtung (6) zum Niederhalten der Filterkerzen (2) gegen den Filterboden (3),
**dadurch gekennzeichnet, dass**
die Niederhalteeinrichtung (6) eine Vielzahl von Einzelniederhaltern (7) jeweils zum Niederhalten genau einer der Filterkerzen (2) aufweist.

2. Heißgasfilteranlage (1) nach Anspruch 1, **dadurch gekennzeichnet, dass** am Filterboden (3) eine Vielzahl von Halterungen (8) angeordnet sind, an denen die Einzelniederhalter (7) über reversibel lösbare Verbindungen, insbesondere Schraubverbindungen (9), montiert sind.

3. Heißgasfilteranlage (1) nach Anspruch 2, **dadurch gekennzeichnet, dass** die Halterungen (8) jeweils ein Montageelement (18), vorzugsweise mit einem Außengewinde, bevorzugt einen Montagebolzen, besonders bevorzugt einen Schweißbolzen, aufweisen, an welchem zumindest ein Distanzelement, vorzugsweise zumindest eine Distanzscheibe (11), bevorzugt zumindest zwei Distanzelemente übereinander, besonders bevorzugt zumindest zwei Distanzscheiben (11) übereinander, angeordnet ist, wobei die Einzelniederhalter (7) über die reversibel lösbaren Verbindungen, insbesondere über die Schraubverbindungen (9), an den Distanzelementen montiert sind.

4. Heißgasfilteranlage (1) nach Anspruch 2 oder 3, **dadurch gekennzeichnet, dass** die Halterungen (6) jeweils mehrere, vorzugsweise jeweils genau vier, Verbindungsschrauben (10) zur Ausbildung mehrerer, vorzugsweise von genau vier, Schraubverbindungen (9) aufweisen.

5. Heißgasfilteranlage (1) nach Anspruch 4, **dadurch gekennzeichnet, dass** die Verbindungsschrauben (10) jeweils verbindungsfrei zum Filterboden (3) angeordnet sind.

6. Heißgasfilteranlage (1) nach einem der Ansprüche 3 bis 5, **dadurch gekennzeichnet, dass** die Verbindungsschrauben (10) jeweils verkippbar gegenüber dem zumindest einen Distanzelement angeordnet sind.

7. Heißgasfilteranlage (1) nach einem der Ansprüche 1 bis 6, **dadurch gekennzeichnet, dass** die Einzelniederhalter (7) jeweils ein Niederhalteteil (12), insbesondere ein Rundteil, zur Auflage an der Stirnseite der jeweiligen Filterkerze (2) aufweisen, wobei die Niederhalteteile (12) jeweils eine zentrale Reingas-Durchgangsöffnung (13) aufweisen.

8. Heißgasfilteranlage (1) nach Anspruch 7, **dadurch gekennzeichnet, dass** die Einzelniederhalter (7) mehrere, vorzugsweise genau vier, vom Niederhalteteil (12) wegstehende Befestigungsflansche (15) aufweisen, welche über die reversibel lösbaren Verbindungen, insbesondere über die Schraubverbindungen (9), mit den Halterungen (8) verbunden sind.

9. Heißgasfilteranlage (1) nach einem der Ansprüche 1 bis 8, **dadurch gekennzeichnet, dass** zwischen benachbarten Einzelniederhaltern (7) Freiräume (17) zur Sichtkontrolle des Filterbodens (3) und/oder von Dichtungen zwischen den Filterkerzen (2) und dem Filterboden (3) ausgebildet sind.

10. Heißgasfilteranlage (1) nach einem der Ansprüche 1 bis 9, **dadurch gekennzeichnet, dass** unterhalb des Filterbodens (3) eine Versteifungsstruktur (23) mit Längs- (24) und/oder Querversteifungselementen (25) angeordnet ist, auf welcher der Filterboden (3) aufliegt.

11. Heißgasfilteranlage (1) nach einem der Ansprüche 1 bis 10, **dadurch gekennzeichnet, dass** eine weitere Filterbodenöffnung (4) des Filterbodens (3) mit einem Blindverschlusselement (20) verschlossen ist, wobei das Blindverschlusselement (20) mit einem weiteren Einzelniederhalter (7) gegen den Filterboden (3) gedrückt ist.

12. Heißgasfilteranlage (1) nach einem der Ansprüche 1 bis 11, **dadurch gekennzeichnet, dass** die Filterkerzen (2) jeweils einen Filterkragen (5) aufweisen, wobei Dichtungen, insbesondere Ringdichtungen, zwischen den Filterkragen (5) der Filterkerzen (2) und dem Filterboden (3) angeordnet sind.

13. Anlage zur Herstellung von Zementklinker, aufweisend:
eine Ofenanlage zum Brennen von Zementklinker,
eine Heißgasfilteranlage (1) zur Entstaubung eines Rohgases der Zementklinkerherstellung nach einem der Ansprüche 1 bis 12.

14. Verfahren zum vorübergehenden Weiterbetrieb einer Heißgasfilteranlage (1) nach einem der Ansprüche 1 bis 12 bei Auftreten eines Defekts an einer der Filterkerzen (2), mit den Schritten:
Lösen des Einzelniederhalters (7), mit welchem die defekte Filterkerze (2) niedergehalten wird, insbesondere ohne die Einzelniederhalter (7) für die übrigen Filterkerzen (2) zu lösen;
Vorzugsweise Entfernen der defekten Filterkerze (2);
Verschließen der Filterbodenöffnung (4) mit einem Blindverschlusselement (20), und
Vorzugsweise Montieren des Einzelniederhalters (7), mit welchem das Blindverschlusselement (20) gegen den Filterboden (3) gedrückt wird.

15. Verfahren zum Austausch einer defekten Filterkerze (2) durch eine neue Filterkerze (2) einer Heißgasfilteranlage (1) nach einem der Ansprüche 1 bis 12, mit den Schritten:
Lösen des Einzelniederhalters (7), mit welchem die defekte Filterkerze (2) niedergehalten wird, insbesondere ohne die Einzelniederhalter (7) für die übrigen Filterkerzen (2) zu lösen;
Entfernen der defekten Filterkerze (2),
Anordnen der neuen Filterkerze (2),
Montieren des Einzelniederhalters (7), so dass die neue Filterkerze (2) mittels des Einzelniederhalters (7) gegen den Filterboden (3) gedrückt wird.
